# FASCICULE DE BREVET EUROPEEN

(11) **EP 2 866 621 B1**
(45) Date de publication et mention de la délivrance du brevet: **06.04.2016**
(21) Numéro de dépôt: 13744679.5
(22) Date de dépôt: 03.07.2013
(51) Int. Cl.: A47J 31/40, A47J 31/46

(54) **DISPOSITIF DE PRÉPARATION D'UNE BOISSON MOUSSÉE ET MACHINE EQUIPÉE D'UN TEL DISPOSITIF**
VORRICHTUNG ZUR HERSTELLUNG EINES GESCHÄUMTEN GETRÄNKES UND MASCHINE MIT EINER SOLCHEN VORRICHTUNG
DEVICE FOR PREPARING A FOAMED BEVERAGE, AND MACHINE PROVIDED WITH SUCH A DEVICE

(30) Priorité: 05.07.2012 FR 1256451
(43) Date de publication de la demande: 06.05.2015
(73) Titulaire: SEB S.A., 69130 Ecully (FR)
(72) Inventeur: RIVA, Arnaud, F-21000 Dijon (FR); MORIN, Gilles, F-21490 Varois Et Chaignot (FR); BOUFFAY, Alain, F-14200 Herouville Saint Clair (FR)
(74) Mandataire: Bourrières, Patrice
(86) Numéro de dépôt international: PCT/FR2013/051564
(87) Numéro de publication internationale: WO 2014/006325

(56) Documents cités:
- EP-A1- 1 932 457
- DE-B3-102006 008 341
- US-A1- 2011 111 109

## Description

La présente invention concerne un dispositif de préparation d'une boisson moussée à partir d'un produit soluble en poudre ou en granulés, par exemple un produit lacté ou chocolaté en granulés, du café soluble ou autres, et en utilisant un ou plusieurs fins jets d'eau chaude dirigés sur ledit produit. L'invention concerne également une machine équipée d'un tel dispositif de préparation d'une boisson moussée.

Il est connu de l'art antérieur des machines équipées d'un système de buse vapeur permettant d'injecter de la vapeur sous pression dans une tasse durant la préparation d'une boisson en sorte de la faire mousser. Ce type de conception est peu économique car il consomme beaucoup d'énergie pour la production de vapeur.

Il ressort également de l'art antérieur plusieurs publications relatives à des machines et/ou des dispositifs de préparation d'une boisson moussée à partir d'un produit en poudre ou granulés et en utilisant de fins jets d'eau chaude, à savoir: GB1367354 ; GB1395702A ; WO1986006942A1; EP373126 ; EP1088504B1 ; FR2845262 ; EP1781152B1 ; WO2006024409A2 ; US7992488 ; EP2127567, US2011/0111109A1 et EP-A-1932457.

Parmi ces publications, on relève notamment le document US2011/0111109A1, dans lequel le dispositif de préparation d'une boisson moussée comprend un système de production d'eau chaude qui est intégré directement dans la machine, un système d'éjection d'eau qui est raccordé au système de production d'eau chaude et qui est configuré pour éjecter de fins jets d'eau. En outre, un réceptacle est positionné en dessous du système d'éjection et reçoit le produit, de sorte que les fins jets d'eau chaude impactent directement sur le produit en incorporant de l'air audit produit durant sa solubilisation, ce qui permet de constituer ladite boisson moussée. Le récipient dispose d'un bec verseur et est agencé sur la machine dans une position inclinée ; la machine est activée pendant une durée suffisamment longue pour que la boisson moussée déborde du récipient par le bec verseur et se déverse dans une tasse disposée sous ledit récipient.

Cette conception de dispositif de préparation d'une boisson moussée, selon US2011/0111109A1, présente plusieurs inconvénients dont la plupart se retrouvent également parmi les autres publications précitées de l'art antérieur.

Tout d'abord, lors de la préparation de la boisson moussée, des grumeaux peuvent se former dans le récipient ; ces grumeaux se déversent avec la boisson moussée dans la tasse. Une quantité de produit non solubilisée se retrouve donc dans la tasse et peut être consommée en l'état, ce qui est désagréable en bouche durant la dégustation de la boisson moussée.

De même, la mousse présente généralement une texture peu homogène, ce qui peut s'avérer désagréable en bouche lors de la dégustation de la boisson moussée.

Par ailleurs, concernant notamment la publication US2011/0111109A1, il est nécessaire de produire une quantité importante de boisson moussée dans le récipient en sorte que celle-ci se déverse dans la tasse. Cela entraîne donc une surconsommation d'eau, d'énergie et de produit. En outre, une quantité importante de boisson moussée demeure dans le récipient, ce qui nécessite de vider systématiquement ce récipient après utilisation.

La présente invention permet de pallier les inconvénients précités. A cet effet l'invention concerne un dispositif de préparation d'une boisson moussée à partir d'un produit soluble en poudre ou granulés. Le dispositif selon l'invention comprend un système de production d'eau chaude, un système d'éjection d'eau configuré pour être raccordé au système de production d'eau chaude et pour éjecter au moins un fin jet d'eau et un réceptacle dans lequel est disposé ledit produit. Le réceptacle et le système d'éjection d'eau sont agencés l'un par rapport à l'autre pour que l'au moins un fin jet d'eau chaude impacte directement sur le produit en incorporant de l'air audit produit durant sa solubilisation en sorte de constituer ladite boisson moussée. En outre, selon l'invention, le réceptacle comporte une grille qui comprend des pores configurés pour maintenir le produit avant sa solubilisation et pour laisser s'écouler la boisson moussée en calibrant la mousse.

Ainsi lorsque les fins jets d'eau chaude impactent sur le produit maintenu par la grille, ledit produit va se solubiliser et constituer un liquide ainsi qu'une mousse. Le liquide va passer librement au travers la grille, tandis que le mousse va passer au travers de la grille avec une calibration correspondant à la dimension des pores de ladite grille, ce qui permet d'obtenir une mousse homogène.

En outre, cette grille permet de retenir les éventuels grumeaux pouvant se former, ce qui évite la présence de tels grumeaux dans la boisson moussée lors de sa dégustation.

Selon un mode préférentiel de conception du dispositif de préparation d'une boisson moussée objet de l'invention, le réceptacle comporte au moins un orifice de sortie configuré pour permettre l'évacuation de la boisson avec sa mousse calibrée hors dudit réceptacle. Cette conception permet de disposer une tasse sous le réceptacle, la boisson moussée se déversant complètement dans ladite tasse. Ainsi ledit réceptacle est complètement vidé lorsque la boisson moussée est préparée, ce qui peut permettre de réutiliser directement le dispositif pour la préparation d'une autre boisson moussée du même type. En outre, on optimise les quantités de produit et d'eau nécessaires à la préparation de la boisson moussée. On comprend en outre que la grille permet avantageusement de contenir le produit dans le récipient avant la préparation de la boisson moussée, en évitant que ledit produit s'échappe par ledit orifice de sortie. Cette conception préférentielle n'est pas limitative ; on peut en effet envisager un réceptacle sans orifice de sortie, dans quel cas le réceptacle peut servir directement de tasse ou alors, la boisson moussée est ensuite déversée du réceptacle dans une tasse.

Selon une conception préférentielle du dispositif de préparation d'une boisson moussée objet de l'invention, celle-ci comprend des moyens de mise à l'air agencés en partie supérieure du réceptacle. Ces moyens de mise à l'air favorise le moussage lorsque les fins jets d'eau impactent le produit.

Selon une conception préférentielle du dispositif de préparation d'une boisson moussée objet de l'invention, le système d'éjection d'eau est constitué d'une pomme de douche qui est configurée pour produire une pluralité de fins jets d'eau. Cela permet d'impacter le produit de manière homogène et favorise la solubilisation dudit produit.

Dans une conception préférentielle du dispositif de préparation d'une boisson moussée objet de l'invention, des moyens de fixation sont agencés entre le système d'éjection d'eau et le réceptacle. Cela permet de solidariser le système d'éjection d'eau et le réceptacle et de garantir un positionnement convenable entre ces deux éléments durant la préparation de la boisson moussée.

Par ailleurs, selon cette conception préférentielle du dispositif de préparation d'une boisson moussée objet de l'invention, les moyens de fixation sont configurés pour maintenir assemblés avec un écartement e1, le réceptacle et le système d'éjection d'eau. Cela permet de constituer lesdits moyens de mise à l'air.

En outre, selon cette conception préférentielle du dispositif de préparation d'une boisson moussée objet de l'invention, ces moyens de fixation sont configurés pour assembler de manière amovible le réceptacle avec le système d'éjection d'eau. Par amovible, on comprend que l'utilisateur peut facilement retirer ou replacer le réceptacle sur le système d'éjection d'eau, sans mettre en oeuvre un outillage. Cela présente pour avantage de permettre le retrait du réceptacle, par exemple pour le nettoyer, pour le remplir de produit lors d'une nouvelle préparation de boisson moussée, voire pour le remplacer par un autre réceptacle de conception adaptée au type de produit et de boisson moussée à préparer.

Dans un mode de réalisation du dispositif de préparation d'une boisson moussée objet de l'invention, le système d'éjection d'eau comprend un orifice débouchant qui est configuré pour communiquer avec le réceptacle en position assemblée sur ce système d'éjection d'eau, depuis l'extérieur dudit système d'éjection d'eau. Un tel orifice débouchant permet de remplir le réceptacle de produit sans devoir le démonter du système d'éjection d'eau, ce qui permet de gagner du temps lorsque plusieurs boissons moussées identiques doivent être préparées successivement.

Selon une conception préférentielle du dispositif de préparation d'une boisson moussée objet de l'invention, les pores de la grille ont un diamètre compris entre 50 µm et 700 µm. le choix du diamètre des pores de la grille, parmi cette plage de dimensions, sera réalisé en fonction du produit à disposer dans le réceptacle.

Selon un mode de conception préférentiel du dispositif de préparation d'une boisson moussée objet de l'invention, celui-ci comprend une cuvette agencée à l'intérieur du réceptacle, au-dessus de la grille. Cette cuvette comprend un fond qui comporte au moins une ouverture agencée au-dessus ladite grille. On comprend que la cuvette reçoit le produit à l'intérieur du réceptacle. Le positionnement de la grille en dessous de la cuvette permet en outre de retenir le produit dans ladite cuvette. Lors de la préparation de la boisson moussée, le produit se solubilise dans la cuvette et la boisson moussée s'évacue par l'au moins une ouverture de cette cuvette et passe au travers la grille qui calibre la mousse. Lorsque le réceptacle comprend au moins un orifice de sortie, la boisson avec sa mousse calibrée sort alors du réceptacle pour se déverser dans une tasse. Au contraire, lorsque le réceptacle ne dispose d'aucun orifice de sortie, ladite boisson avec sa mousse calibrée reste dans le réceptacle en dessous de la grille.

Selon cette conception préférentielle du dispositif de préparation d'une boisson moussée objet de l'invention, la forme de la cuvette est configurée pour générer plus ou moins de turbulences dans le réceptacle en fonction du type de préparation de boisson moussée. Cela permet de préparer différents types de boissons moussées dans des conditions optimales au moyen du dispositif objet de l'invention.

Selon cette conception préférentielle du dispositif de préparation d'une boisson moussée objet de l'invention, la cuvette et/ou la grille sont amovibles du réceptacle. Cela permet d'utiliser un seul et unique réceptacle et d'adapter uniquement la grille et/ou la cuvette en fonction du type de boisson moussée à préparer. Cela facilite en outre le nettoyage de la grille, de la cuvette et du réceptacle.

Selon un mode de conception préférentiel du dispositif de préparation d'une boisson moussée objet de l'invention, le système d'éjection d'eau comprend au moins un petit trou configuré pour créer ledit au moins un fin jet d'eau, le petit trou étant revêtu d'une matière élastomère ou réalisé dans une surface en matière élastomère. Une telle conception permet de limiter le bouchage des trous par des impuretés ou un dépôt de tartre.

Selon un mode de conception préférentiel du dispositif de préparation d'une boisson moussée objet de l'invention, le système d'éjection d'eau comprend au moins un petit trou configuré pour créer ledit au moins un fin jet d'eau, ledit système d'éjection d'eau et le réceptacle étant configurés pour que la distance séparant l'au moins un petit trou et la surface supérieure du produit disposé dans le réceptacle, avant solubilisation, soit comprise entre 5 mm et 50 mm. Ces dimensions permettent d'avoir une distance optimisée en sorte de permettre un moussage convenable de la boisson en favorisant la création de petites bulles dans la mousse, tout en restreignant la hauteur du réceptacle.

Avantageusement, le réceptacle comporte un couvercle mobile entre une position ouverte de remplissage et une position fermée anti éclaboussures, ledit couvercle comportant au moins un orifice permettant le passage du fin jet d'eau chaude lorsque le récaptacle est agencé en vis-à-vis du système d'éjection d'eau (7).

Cette disposition permet d'éviter de salir le dispositif d'éjection d'eau qui est protégé par le couvercle lors de la préparation de la boisson moussée. Les projections se déposent sur une face interne du couvercle qui peut être facilement nettoyée une fois le réceptacle retiré.

L'invention concerne également une machine pour la préparation de boissons, laquelle comprend au moins un dispositif de préparation d'une boisson moussée objet de la présente invention. On peut en effet envisager une machine spécifique à la préparation de boissons moussées, mais également une machine permettant à la fois la préparation de boissons moussée et d'autres boissons telles que, par exemple, des boissons froides plates ou gazéifiées.

Selon une conception préférentielle de la machine pour la préparation de boissons, le système de production d'eau chaude est incorporé dans ladite machine. On pourrait en effet envisager un dispositif de préparation de boisson moussée indépendant d'une machine de préparation de boisson, ledit dispositif étant rapporté ou adapté sur ladite machine. Cette conception préférentielle permet de limiter l'encombrement de la machine et de réduire le coût de fabrication.

Selon cette conception préférentielle de la machine pour la préparation de boissons, des moyens de connexion amovible sont agencés entre le système de production d'eau chaude et le système d'éjection d'eau. En outre, des moyens de support sont agencés pour supporter le système d'éjection d'eau lors de sa connexion au système de production d'eau chaude. Cela permet un démontage du système d'éjection d'eau et du réceptacle vis-à-vis de la machine, par exemple pour leur remplacement ou leur nettoyage.

Les caractéristiques et avantages de la présente invention apparaîtront à la lecture de la description suivante qui s'appuie sur des figures, parmi lesquelles :
- La figure 1 schématise une première variante de conception du dispositif de préparation d'une boisson moussée selon l'invention, en cours de fonctionnement ;
- Les figures 2A - 2D illustrent quatre variantes de conception d'une cuvette ;
- La figure 3 illustre le système d'éjection d'eau assemblé avec le réceptacle de la figure 1 et met en évidence des moyens de mise à l'air existant entre ces deux éléments lorsqu'ils sont assemblés entre eux ;
- La figure 4 illustre le système d'éjection d'eau et le réceptacle des figures 1 et 3 avec du produit dans ledit réceptacle, avant préparation de la boisson moussée ;
- La figure 5 illustre en perspective le système d'éjection d'eau et le réceptacle des figures 1, 3 et 4, en position assemblée ;
- La figure 6 illustre un mode de conception de la grille ;
- La figure 7 illustre un mode de conception d'une machine équipée d'un dispositif de préparation d'une boisson moussée et montre tout particulièrement une seconde variante de conception d'un système d'éjection d'eau ;
- La figure 8 illustre la machine de la figure 7 avec le système d'éjection d'eau assemblée avec le réceptacle et en position dégagée vis-à-vis de la machine et ;
- La figure 9 illustre une troisième variante de conception du dispositif de préparation de boisson moussée et tout particulièrement du réceptacle ;
- La figure 10 illustre un mode de réalisation du réceptacle comportant un couvercle en position ouverte,
- La figure 11 illustre le réceptacle de la figure 10, le couvercle en position fermée.

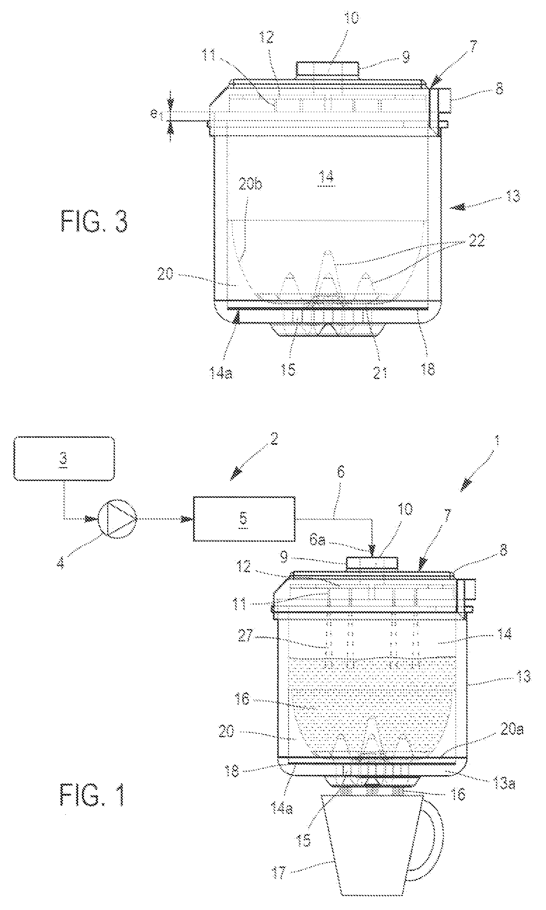

Tel que schématisé sur la figure 1, le dispositif de préparation d'une boisson moussée 1 comprend un système de production d'eau chaude 2. Ce système de production d'eau chaude 2 comprend, de préférence, un réservoir 3 permettant le stockage provisoire de l'eau froide, une pompe 4 permettant la circulation de l'eau, un élément chauffant 5 du type résistif permettant de chauffer l'eau et un tube 6 constitué par exemple d'un tuyau flexible dans lequel circule l'eau du réservoir jusqu'à son extrémité 6a où l'eau est distribuée, chauffée. Ces caractéristiques sont bien connues de l'homme du métier ; elles ne seront donc pas décrites plus en détail. Bien entendu des variantes sont envisageables. On pourrait, par exemple, supprimer le réservoir 3 et raccorder la pompe 4 directement sur une alimentation en eau potable, externe.

Comme illustré sur la figure 1, le système de production d'eau chaude 2 est raccordé à un système d'éjection d'eau 7. Ce système d'éjection d'eau 7 est constitué d'une pomme de douche 8 qui comprend un embout 9 muni d'un orifice d'entrée 10. Cet embout 9 est configuré pour être raccordé avec l'extrémité 6a du tube 6. On peut par exemple prévoir d'emboîter ou de visser l'embout 9 sur l'extrémité 6a du circuit 6. Comme illustré sur les figures 1, 3, 4 et 5, selon cette conception du système d'éjection d'eau 7, l'embout 9 est orienté verticalement vers le haut.

La pomme de douche 8 comprend des petits trous 11 uniformément répartis qui communiquent avec l'orifice d'entrée 10 par le biais de canaux 12. Ces petits trous 11 constituent des buses permettant l'éjection de fins jets d'eau chaude 27, comme illustré en figure 1. Par exemple, ces trous 11 présentent un diamètre de l'ordre de 0,5 mm. Le nombre de petits trous 11 peut varier; la pomme de douche 8 comprend par exemple 6 petits trous 11. Ces petits trous sont de préférence revêtus d'une matière qui évite leur bouchage par des impuretés ou du tartre. On utilise de préférence une matière élastomère, par exemple une matière silicone, pour revêtir les petits trous 11. Cette matière élastomère peut être rapportée voire surmoulée dans la zone des petits trous 11.

Le dispositif de préparation d'une boisson moussée 1 comprend un réceptacle 13. Selon une première variante illustrée sur les figures 1, 3, 4 et 5, ce réceptacle 13 comprend une chambre intérieure 14. La partie inférieure 13a du réceptacle comprend des orifices de sortie 15 qui permettent l'écoulement d'une boisson moussée 16 par le bas dudit réceptacle 13, la boisson moussée 16 se déversant dans une tasse 17, par exemple, comme illustré en figure 1.

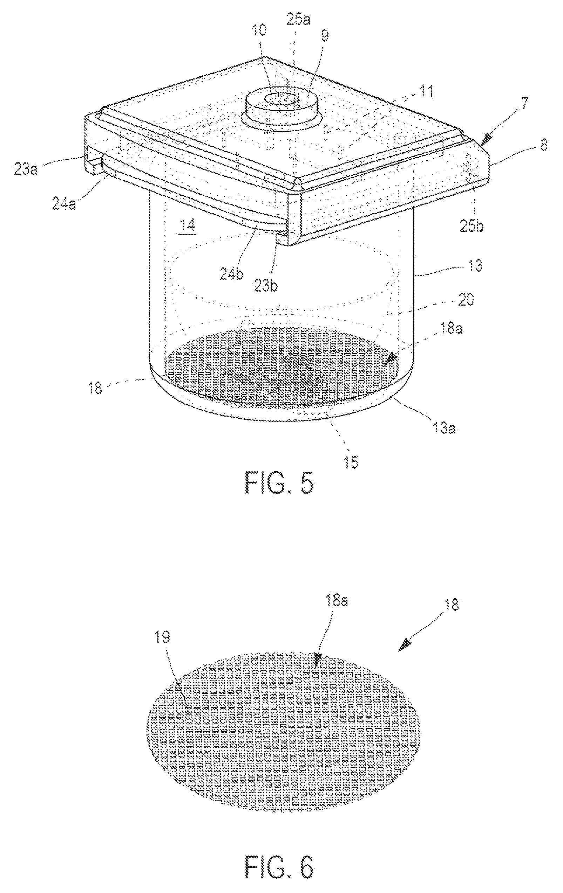

Comme illustré sur ces figures 1, 3, 4 et 5, une grille 18 est positionnée dans le fond 14a de la chambre intérieure 14. Cette grille 18 est de forme et de dimension adaptées à celles du réceptacle 13 et elle comprend des pores 19, tel que représenté sur la figure 6. Ces pores 19 présentent de préférence un diamètre compris entre 50 µm et 700 µm. Le choix du diamètre des pores 19 de la grille 18 est fonction de la boisson moussée à préparer. Les dimensions de ces pores 19 sont configurées pour retenir un produit 26 non solubilisé puis, lors de la préparation de la boisson moussée, pour laisser passer le liquide et la mousse, en calibrant ladite mousse. Cela permet d'obtenir une texture homogène de la mousse. En outre, cette grille 18 permet de retenir les grumeaux qui pourraient éventuellement se former lors de l'éjection des fins jets d'eau chaude. Par exemple, pour une boisson moussée à base de lait en poudre, on utilise une grille 18 avec des pores 19 d'un diamètre compris entre 400 µm et 500 µm. Pour du café lyophilisé, on utilise une grille 18 avec des pores 19 d'un diamètre compris entre 100 µm et 300 µm. Pour du thé en poudre, on utilise une grille 18 avec des pores 19 d'un diamètre supérieur à 500 µm.

Comme illustré sur les figures 1 à 5, le dispositif de préparation d'une boisson moussée 1 comprend une cuvette 20 dont la forme et les dimensions sont adaptées à celles de la chambre intérieure 14 du réceptacle 13. Cette cuvette 20 est insérée par coulissement dans la chambre intérieure 14 et vient se positionner au-dessus de la grille 18. Le fond 20a de la cuvette 20 est donc en contact avec la face supérieure 18a de la grille 18.

Le fond 20a de la cuvette 20 comprend une ou plusieurs ouvertures 21. Selon le mode de réalisation illustré sur les figures 1 à 5, le nombre et la position des ouvertures 21 sur la cuvette 20 correspondent avec le nombre et la position des orifices de sortie 15 sur le réceptacle 13, la grille 18 étant prise en sandwich entre le fond 14a de la chambre intérieure 14 du réceptacle 13 et le fond 20a de la cuvette 20.

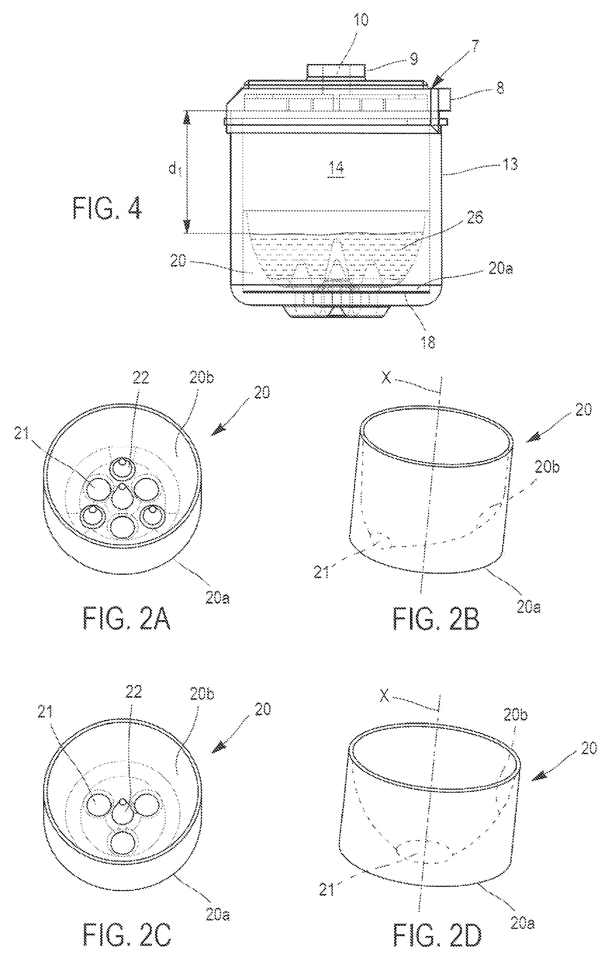

Comme illustré sur les figures 2A à 2D, la cuvette 20 peut présenter une forme intérieure 20b de diverses conceptions adaptées pour générer plus ou moins de turbulences dans ladite cuvette 20 et ainsi favoriser la solubilisation et l'agitation du produit 26 lors de la préparation de la boisson moussée. Ces formes intérieures 20b permettent de répartir uniformément le produit dans la cuvette 20 et contribuent à prévenir l'agrégation du produit sous forme de grumeaux qui se solubilisent difficilement. Sur la figure 2A, la forme intérieure 20a comprend une forme conique régulière avec trois ouvertures 21 uniformément réparties et quatre cônes inversés 22 uniformément répartis entre lesdites trois ouvertures 21. Sur la figure 2B, la forme intérieure 20b comprend une forme conique se terminant par une seule ouverture 21 déportée sur le côté par rapport à un axe de révolution X de la cuvette 20. Sur la figure 2C, la forme intérieure 20a comprend une forme conique régulière avec trois ouvertures 21 uniformément réparties et un seul cône inversé 22 disposé au centre entre lesdites trois ouvertures 21. Sur la figure 2D, la forme intérieure 20b comprend une forme conique régulière se terminant par une seule ouverture 21 disposée dans l'axe de révolution X de la cuvette 20. D'autres formes intérieures 20b pour la cuvette 20 pourraient être envisagées sans sortir du cadre de l'invention. A titre d'exemples préférentiels, on utilisera la cuvette 20 de la figure 2A pour la préparation d'une boisson moussée à base de lait en poudre et la cuvette 20 de la figure 2D pour la préparation d'une boisson moussée à base de café lyophilisé.

Comme illustré sur les figures 1, 3, 4 et 5, la pomme de douche 8 est assemblée avec le réceptacle 13. Pour cela, la pomme de douche 8 comprend deux rainures 23a, 23b disposées en vis-à-vis, tel qu'illustré en figure 5. De même, le réceptacle 13 comprend en partie supérieure deux épaulements 24a, 24b qui s'engagent à coulissement respectivement dans les deux rainures 23a, 23b, tel qu'illustré en figure 5. Ces épaulements 24a, 24b viennent respectivement en butée 25a, 25b dans le fond des rainures 23a, 23b, ce qui limite le coulissement entre la pomme de douche 8 et le réceptacle 13. Cette conception permet de retirer facilement le réceptacle 13 de la pomme de douche 8.

On constate sur la figure 5 que l'épaisseur des rainures 23a, 23b est supérieure à l'épaisseur des épaulements 24a, 24b. Cela permet de maintenir un écartement e1, illustré en figure 3, entre la pomme de douche 8 et le réceptacle 13 et ainsi, de laisser pénétrer de l'air dans la chambre intérieure 14 dudit réceptacle 13. De préférence, cet écartement e1 sera de l'ordre de 1 mm. Cette mise à l'air de la chambre intérieure 14 favorise le moussage de la boisson lorsque les fins jets d'eau chaude impactent directement sur le produit. Bien entendu, d'autres moyens de mise à l'air sont envisageables. On peut par exemple agencer des trous de passage de l'air en partie supérieure du réceptacle 13 et débouchant dans la partie supérieure de la chambre intérieure 14.

Tel qu'illustré sur la figure 4, les dimensions du réceptacle 13 et de la cuvette 20 sont choisies en sorte que, lorsque le réceptacle 13 est assemblé avec la pomme de douche 8 et que le produit 26 à l'état non solubilisé est disposé dans la cuvette 20, ledit produit 26 soit séparé des petits trous 11 de la pomme de douche 8, d'une distance d1 qui est de préférence comprise entre 5 mm et 50 mm en fonction du type de produit 26. Ce choix favorise un moussage optimal de la boisson lorsque les fins jets d'eau chaude 27 impactent le produit 26.

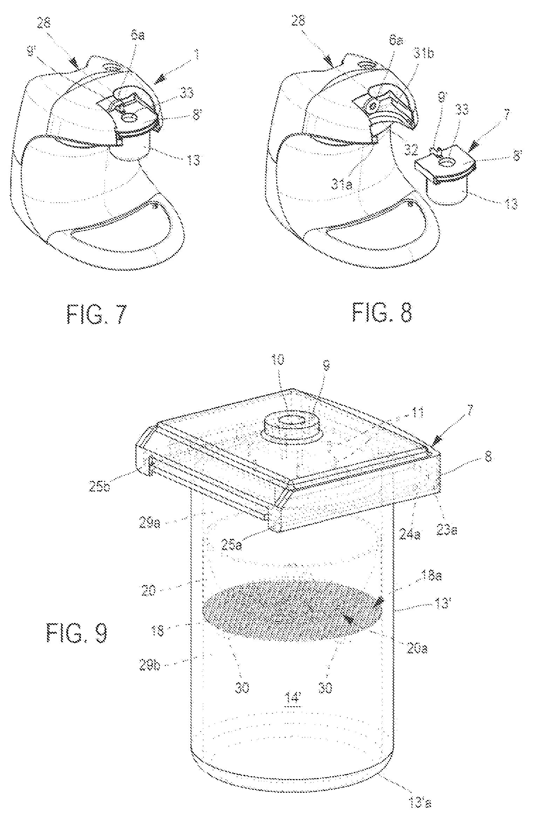

Sur les figures 7 et 8 est représentée une machine 28 pour la préparation d'une boisson qui comprend un dispositif de préparation d'une boisson moussée 1. Le système de production d'eau chaude 2, schématisé en figure 1, est intégré dans ladite machine 8. L'extrémité 6a du tube 6 du système de production d'eau chaude 2 est apparente et constitue la partie femelle de moyens de connexion avec le système d'éjection d'eau 7. A ce titre, on constate sur ces figures 7 et 8 une seconde variante de conception du système d'éjection d'eau 7 constitué d'une pomme de douche 8' qui présente une conception similaire à la pomme de douche 8 des figures 1, 3, 4 et 5, à l'exception que l'embout 9' est agencé horizontalement et non verticalement. Cet embout 9' constitue la partie mâle des moyens de connexion et s'emboîte dans l'extrémité 6a du tube 6 du système de production d'eau chaude 2, comme illustré sur ces figures 7 et 8. Bien entendu on peut envisager des moyens de connexion similaires pour la pomme de douche 8 illustrée en figures 1, 2, 3, 4 et 5 en adaptant la position de l'extrémité 6a du tube 6 sur la machine 8. Des variantes de moyens de connexion sont en outre envisageables. Par exemple, on peut adapter l'extrémité 6a et l'embout 9, 9' pour inverser les parties mâles et femelle qui s'emboîtent l'une dans l'autre. On pourrait prévoir, en remplacement, un système de vissage étanche entre l'extrémité 6a du tube 6 et l'embout 9, 9'.

On constate sur la figure 8 la présence de deux portions épaulées 31 a, 31 b avec une zone de logement 32. La zone de logement 32 permet la réception du réceptacle 13 et les deux portions épaulées 31 a, 31 b permettent le support de la pomme de douche 8' lorsque cette pomme de douche 8' est connectée sur la machine 8, comme illustré en figure 7.

Sur ces figures 7 et 8, on constate en outre que cette variante de pomme de douche 8' comprend un orifice débouchant 33 qui communique avec la chambre intérieure 14 du réceptacle 13. Cela permet de verser le produit 26 directement dans la cuvette 20, sans devoir démonter le réceptacle 13 de la pomme de douche 8'. A ce titre, les moyens d'assemblage entre le réceptacle 13 et la pomme de douche 8' sont de préférence similaires à ceux décrits pour les figures 1, 2, 3, 4 et 5.

Sur la figure 9, le système d'éjection d'eau 7 est constitué d'une pomme de douche 8 identique à celle décrite en figures 1, 2, 3, 4 et 5. On constate au contraire une variante de réceptacle 13' selon laquelle la chambre intérieure 14' est séparée en deux compartiments, l'un supérieur 29a et l'autre inférieur 29b. Cette séparation des compartiments 29a, 29b est réalisée par la grille 18 qui est maintenue en position par des pattes de support 30. On constate sur cette figure 9, que la cuvette 20 est disposée au-dessus de la grille 18, dans le compartiment supérieur 29a, le fond 20a de la cuvette 20 reposant sur la face supérieure 18a de la grille 18. Le réceptacle 13' ne comporte aucune ouverture dans sa partie inférieure 13'a. Ainsi, lorsque la boisson moussée est préparée, celle-ci reste dans le compartiment inférieur 29b de la chambre intérieure 14' après être passée au travers de la grille 18 pour un calibrage de la mousse. Il convient alors de démonter le réceptacle 13' de la pomme de douche 8 et de retirer la cuvette 20 et la grille 18 pour consommer la boisson moussée, soit directement dans le réceptacle 13' soit en le versant au préalable dans une tasse 17.

Pour ces deux variantes de conception du réceptacle 13, 13' illustrées en figures 1, 3, 4, 5 et 9, la cuvette 20 et la grille 18 sont amovibles. Cela facilite leur nettoyage et permet en outre de pouvoir les remplacer par d'autres cuvettes et grilles adaptées aux types de boissons moussées à préparer. Des variantes de conception sont toutefois envisageables. On peut par exemple prévoir une conception similaire à celle illustrée en figures 1, 3, 4, et 5, mais avec un réceptacle 13, une grille 18 et une cuvette 20 réalisés en une seule et unique pièce moulée.

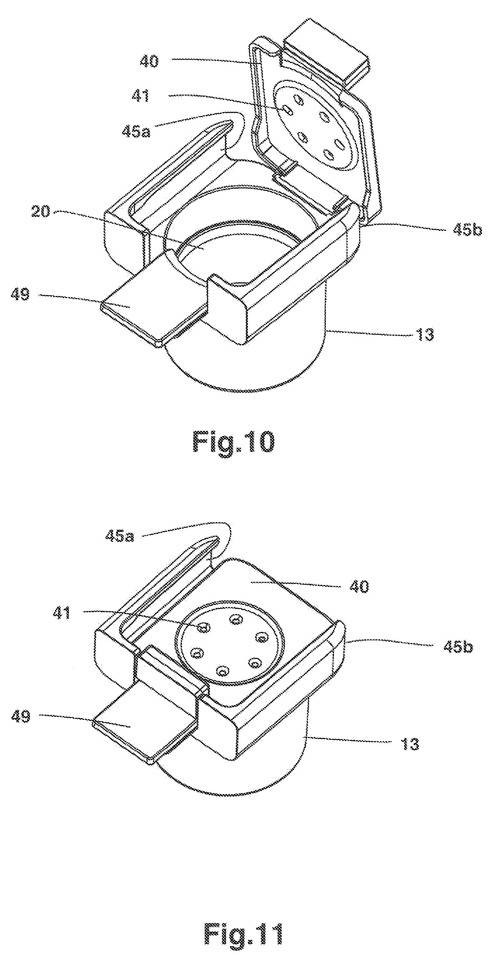

Une variante de réalisation du réceptacle 13 est illustrée aux figures 10 et 11. Cette variante de réalisation pourrait être également appliquée au réceptacle 13'. Le réceptacle 13 comporte un couvercle 40 mobile, de préférence en rotation, entre une première position ouverte et une deuxième position fermée. Dans la première position ouverte, l'intérieur du réceptacle est accessible par l'utilisateur, notamment pour verser du produit soluble ou pour le nettoyer. Dans la deuxième position fermée, le réceptacle 13 peut être agencé sur la pomme de douche 8, 8'. Dans cette variante de réalisation, le réceptacle 13 comporte deux rainures 45a, 45b disposées en vis-à-vis et la pomme de douche (non illustrée) comprend deux épaulements. Les deux rainures 45a, 45b s'engagent à coulissement respectivement dans les deux épaulements. Le couvercle 40 comportent des orifices 41 agencés en vis-à-vis des petits trous 11 lorsque le réceptacle 13 est mis en place sur la pomme de douche 8, 8'.

Avantageusement, la cuvette 20 comporte une poignée 49 qui s'étend hors du réceptacle 13. Ainsi, la manipulation et le nettoyage de la cuvette 20 est facilitée.

D'autres caractéristiques sont envisageables sans sortir du cadre de l'invention. A titre d'exemple non limitatif, on peut prévoir un réceptacle 13, 13' transparent, ce qui incitera l'utilisateur à nettoyer le réceptacle et/ou la cuvette 20 et/ou la grille 18. On peut également prévoir une conception de réceptacle similaire au réceptacle 13' de la figure 9, en y ajoutant un ou plusieurs orifices de sortie 15 en partie inférieure 13'a. On peut également prévoir une conception de réceptacle similaire à l'un ou l'autre des réceptacles 13 ou 13', avec une grille 18 mais sans cuvette 20. La forme de la chambre intérieure 14 ou 14' pouvant dans ce cas être adaptée pour faciliter la solubilisation du produit 26.

On pourrait toutefois aussi envisager des machines 8 beaucoup plus complexes, permettant la préparation de divers types de boissons, moussées ou non, et intégrant un ou plusieurs dispositifs de préparation de boissons moussées 1 pour lesquels les systèmes de production d'eau chaude 2 peuvent être indépendants ou communs, et intégrés dans les machines 8 voire rapportés sur celles-ci.

## Revendications

1. Dispositif de préparation d'une boisson moussée (1) à partir d'un produit soluble en poudre ou granulés, qui comprend un système de production d'eau chaude (2), un système d'éjection d'eau (7) configuré pour être raccordé au système de production d'eau chaude et pour éjecter au moins un fin jet d'eau (27) et un réceptacle (13, 13') dans lequel est disposé ledit produit (26), le réceptacle (13, 13') et le système d'éjection d'eau (7) étant agencés l'un par rapport à l'autre pour que l'au moins un fin jet d'eau chaude (27) impacte directement sur le produit en incorporant de l'air audit produit durant sa solubilisation en sorte de constituer ladite boisson moussée, ledit réceptacle (13, 13') comporte une grille (18) qui comprend des pores (19) configurés pour maintenir le produit avant sa solubilisation et pour laisser s'écouler la boisson moussée en calibrant la mousse **caractérisé en ce que** le dispositif de préparation d'une boisson moussée (1) comprend une cuvette (20) agencée à l'intérieur du réceptacle (13, 13') au-dessus de la grille (18), la cuvette comprenant un fond (20a) qui comporte au moins une ouverture (21) agencée au-dessus de ladite grille.

2. Dispositif de préparation d'une boisson moussée (1) selon la revendication 1, dans lequel le réceptacle (13) comporte au moins un orifice de sortie (15) configuré pour permettre l'évacuation de la boisson avec sa mousse calibrée hors dudit réceptacle (13).

3. Dispositif de préparation d'une boisson moussée (1) selon l'une quelconque des revendications 1 ou 2, lequel comprend des moyens de mise à l'air (e1) agencés en partie supérieure du réceptacle (13, 13').

4. Dispositif de préparation d'une boisson moussée (1) selon l'une quelconque des revendications 1 à 3, dans lequel le système d'éjection d'eau (7) est constitué d'une pomme de douche (8, 8') configurée pour produire une pluralité de fins jets d'eau (27).

5. Dispositif de préparation d'une boisson moussée (1) selon l'une quelconque des revendications 1 à 4, dans lequel des moyens de fixation (23a, 23b, 24a, 24b, 25a, 25b) sont agencés entre le système d'éjection d'eau (7) et le réceptacle (13, 13').

6. Dispositif de préparation d'une boisson moussée (1) selon la revendication 5, dans lequel les moyens de fixation (23a, 23b, 24a, 24b, 25a, 25b) sont configurés pour assembler de manière amovible le réceptacle (13, 13') avec le système d'éjection d'eau (7).

7. Dispositif de préparation d'une boisson moussée (1) selon l'une quelconque des revendications 1 à 6, dans lequel le système d'éjection d'eau (7) comprend un orifice débouchant (33) configuré pour communiquer avec le réceptacle (13, 13') en position assemblée sur le système d'éjection d'eau depuis l'extérieur dudit système d'éjection d'eau.

8. Dispositif de préparation d'une boisson moussée (1) selon l'une quelconque des revendications 1 à 7, dans lequel les pores (19) de la grille (18) ont un diamètre compris entre 50 µm et 700 µm.

9. Dispositif de préparation d'une boisson moussée (1) selon l'une quelconque des revendications 1 à 8, dans lequel la cuvette (20) et/ou la grille (18) sont amovibles du réceptacle (13, 13').

10. Dispositif de préparation d'une boisson moussée (1) selon l'une quelconque des revendications 1 à 9, dans lequel le réceptacle (13, 13') comporte un couvercle (40) mobile entre une position ouverte de remplissage et une position fermée anti éclaboussures, ledit couvercle (40) comportant au moins un orifice (41) permettant le passage du fin jet d'eau chaude (27) lorsque le récaptacle (13, 13') est agencé en vis-à-vis du système d'éjection d'eau (7).

11. Machine pour la préparation de boissons (28), laquelle comprend au moins un dispositif de préparation d'une boisson moussée (1) selon l'une quelconque des revendications 1 à 10.

12. Machine pour la préparation de boissons (28) selon la revendication 11, dans laquelle le système de production d'eau chaude (2) est incorporé dans ladite machine.

13. Machine pour la préparation de boissons (28) selon la revendication 12, dans laquelle des moyens de connexion amovible (6a, 9, 9') sont agencés entre le système de production d'eau chaude (2) et le système d'éjection d'eau (7) et des moyens de support (31 a, 31 b, 32) sont agencés pour supporter le système d'éjection d'eau (7) lors de sa connexion au système de production d'eau chaude (2).

## Patentansprüche

1. Vorrichtung (1) zur Zubereitung eines aufgeschäumten Getränks aus einem löslichen Produkt in Pulver- oder Granulatform, die Folgendes umfasst: ein System (2) zum Erzeugen von Heißwasser, ein System (7) zum Ausstoßen von Wasser, das für den Anschluss an das System zum Erzeugen von Heißwasser und zum Ausstoßen zumindest eines feinen Wasserstrahls (27) ausgelegt ist, und einen Behälter (13, 13'), in dem sich das genannte Produkt (26) befindet, wobei der Behälter (13, 13') und das System (7) zum Ausstoßen von Wasser so zueinander angeordnet sind, dass der zumindest eine feine Heißwasserstrahl (27) direkt auf das Produkt trifft und dabei während seiner Solubilisierung in dem genannten Produkt Luft beifügt, sodass das genannte aufgeschäumte Getränk entsteht, wobei der genannte Behälter (13, 13') ein Gitter (18) umfasst, das Poren (19) aufweist, die so ausgelegt sind, dass sie das Produkt vor seiner Solubilisierung zurückhalten und das aufgeschäumte Getränk durchlaufen lassen, indem sie den Schaum kalibrieren, **dadurch gekennzeichnet, dass** die Vorrichtung (1) zur Zubereitung eines aufgeschäumten Getränks einen Becher (20) umfasst, der sich in dem Behälter (13, 13') über dem Gitter (18) befindet, wobei der Becher einen Boden (20a) aufweist, der mit mindestens einer Öffnung (21) versehen ist, die sich oberhalb des genannten Gitters befindet.

2. Vorrichtung (1) zur Zubereitung eines aufgeschäumten Getränks nach Anspruch 1, wobei der Behälter (13) zumindest eine Austrittsöffnung (15) aufweist, die so ausgelegt ist, dass sie den Austritt des Getränks mit kalibriertem Schaum aus dem genannten Behälter (13) gestattet.

3. Vorrichtung (1) zur Zubereitung eines aufgeschäumten Getränks nach einem der Ansprüche 1 oder 2, die Mittel zur Belüftung (e1) umfasst, die sich im oberen Teil des Behälters (13, 13') befinden.

4. Vorrichtung (1) zur Zubereitung eines aufgeschäumten Getränks nach einem der Ansprüche 1 bis 3, wobei das System (7) zum Ausstoßen von Wasser aus einem Düsenkopf (8, 8') besteht, der für die Erzeugung einer Vielzahl feiner Wasserstrahlen (27) ausgelegt ist.

5. Vorrichtung (1) zur Zubereitung eines aufgeschäumten Getränks nach einem der Ansprüche 1 bis 4, wobei Befestigungsmittel (23a, 23b, 24a, 24b, 25a, 25b) zwischen dem System (7) zum Ausstoßen von Wasser und dem Behälter (13, 13') angeordnet sind.

6. Vorrichtung (1) zur Zubereitung eines aufgeschäumten Getränks nach Anspruch 5, wobei Befestigungsmittel (23a, 23b, 24a, 24b, 25a, 25b) dafür ausgelegt sind, den Behälter (13, 13') abnehmbar am System (7) zum Ausstoßen von Wasser anzubringen.

7. Vorrichtung (1) zur Zubereitung eines aufgeschäumten Getränks nach einem der Ansprüche 1 bis 6, wobei das System (7) zum Ausstoßen von Wasser eine einmündende Öffnung (33) umfasst, die dafür ausgelegt ist, in der am System zum Ausstoßen von Wasser angebrachten Position von außerhalb des genannten Systems zum Ausstoßen von Wasser mit dem Behälter (13, 13') in Verbindung zu stehen.

8. Vorrichtung (1) zur Zubereitung eines aufgeschäumten Getränks nach einem der Ansprüche 1 bis 7, wobei die Poren (19) des Gitters (18) einen Durchmesser zwischen 50 µm und 700 µm aufweisen.

9. Vorrichtung (1) zur Zubereitung eines aufgeschäumten Getränks nach einem der Ansprüche 1 bis 8, wobei der Becher (20) und/oder das Gitter (18) vom Behälter (13,13') abnehmbar sind.

10. Vorrichtung (1) zur Zubereitung eines aufgeschäumten Getränks nach einem der Ansprüche 1 bis 9, wobei der Behälter (13, 13') einen zwischen einer offenen Einfüllstellung und einer geschlossenen Spritzschutzstellung beweglichen Deckel aufweist, wobei der genannte Deckel (40) mit mindestens einer Öffnung (41) versehen ist, die den Durchtritt des feinen Heißwasserstrahls (27) gestattet, wenn der Behälter (13, 13') dem System (7) zum Ausstoßen von Wasser gegenüberliegt.

11. Maschine (28) zur Zubereitung von Getränken, die zumindest eine Vorrichtung (1) zur Zubereitung eines aufgeschäumten Getränks nach einem der Ansprüche 1 bis 10 umfasst.

12. Maschine (28) zur Zubereitung von Getränken nach Anspruch 11, wobei das System (2) zum Erzeugen von Heißwasser in die genannte Maschine integriert ist.

13. Maschine (28) zur Zubereitung von Getränken nach Anspruch 12, wobei die Mittel (6a, 9, 9') zum abnehmbaren Verbinden zwischen dem System (2) zum Erzeugen von Heißwasser und dem System (7) zum Ausstoßen von Wasser angeordnet sind und wobei Haltemittel (31 a, 31 b, 32) zur Aufnahme des Systems (7) zum Ausstoßen von Wasser bei seinem Anschluss an das System (2) zum Erzeugen von Heißwasser vorgesehen sind.

## Claims

1. Device for preparing a foamed beverage (1) from a soluble product in powder or granule form, which comprises a hot water production system (2), a water ejection system (7) configured to be connected to the hot water production system and to eject at least one fine stream of water (27) and a receptacle (13, 13') containing said product (26), the receptacle (13, 13') and the water ejection system (7) being arranged with respect to one another so that the at least one fine stream of hot water (27) strikes the product directly, incorporating air into said product during its solubilisation so as to form said foamed beverage, said receptacle (13, 13') comprises a grid (18) which includes pores (19) configured to hold the product before its solubilisation and to allow the foamed beverage to flow through while calibrating the foam, **characterised in that** the device for preparing a foamed beverage (1) comprises a bowl (20) arranged inside the receptacle (13, 13') above the grid (18), the bowl comprising a bottom (20a) which has at least one opening (21) arranged above said grid.

2. Device for preparing a foamed beverage (1) according to claim 1, wherein the receptacle (13) has at least one outlet orifice (15) configured to allow evacuation of the beverage with its calibrated foam out of said receptacle (13).

3. Device for preparing a foamed beverage (1) according to claim 1 or 2, which includes venting means (e1) arranged in the upper part of the receptacle (13, 13').

4. Device for preparing a foamed beverage (1) according to any one of claims 1 to 3, wherein the water ejection system (7) comprises a shower head (8, 8') configured to produce a plurality of fine streams of water (27).

5. Device for preparing a foamed beverage (1) according to any one of claims 1 to 4, wherein fixing means (23a, 23b, 24a, 24b, 25a, 25b) are arranged between the water ejection system (7) and the receptacle (13, 13').

6. Device for preparing a foamed beverage (1) according to claim 5, wherein the fixing means (23a, 23b, 24a, 24b, 25a, 25b) are configured to removably assemble the receptacle (13, 13') with the water ejection system (7).

7. Device for preparing a foamed beverage (1) according to any one of claims 1 to 6, wherein the water ejection system (7) comprises a through orifice (33) configured to communicate with the receptacle (13, 13') in the assembled position on the water ejection system from the outside of said water ejection system.

8. Device for preparing a foamed beverage (1) according to any one of claims 1 to 7, wherein the pores (19) of the grid (18) have a diameter between 50 µm and 700 µm.

9. Device for preparing a foamed beverage (1) according to any one of claims 1 to 8, wherein the bowl (20) and/or the grid (18) can be removed from the receptacle (13, 13').

10. Device for preparing a foamed beverage (1) according to any one of claims 1 to 9, wherein the receptacle (13, 13') comprises a lid (40) movable between an open filling position and a closed non-splash position, said lid (40) having at least one orifice (41) allowing the passage of a fine stream of hot water (27) when the receptacle (13, 13') is arranged opposite the water ejection system (7).

11. Machine for preparing beverages (28), which comprises at least a device for preparing a foamed beverage (1) according to any one of claims 1 to 10.

12. Machine for preparing beverages (28) according to claim 11, wherein the hot water production system (2) is incorporated in said machine.

13. Machine for preparing beverages (28) according to claim 12, wherein removable connection means (6a, 9, 9') are arranged between the hot water production system (2) and the water ejection system (7) and support means (31 a, 31 b, 32) are arranged to support the water ejection system (7) during its connection to the hot water production system (2).
